# EUROPÄISCHE PATENTSCHRIFT

(11) **EP 0 855 473 B1**
(45) Veröffentlichungstag und Bekanntmachung des Hinweises auf die Patenterteilung: **19.03.2003**
(21) Anmeldenummer: 98105483.6
(22) Anmeldetag: 21.04.1995
(51) Int. Cl.: E03B 1/04

(54) **Vorrichtung und Verfahren zur Nutzung von Grauwasser**
Device and process for reusing grey water
Dispositif et procédé permettant d'utiliser les eaux usagées

(30) Priorität: 23.04.1994 DE 4414207; 23.06.1994 DE 4421668
(43) Veröffentlichungstag der Anmeldung: 29.07.1998
(62) Teilanmeldung aus: 95918585.1
(73) Patentinhaber: Hansgrohe AG, 77761 Schiltach (DE)
(72) Erfinder: Hauser, Dieter, 78554 Aldingen (DE); Heinzelmann, Werner, 72275 Alpirsbach (DE)
(74) Vertreter: Patentanwälte Ruff, Wilhelm, Beier, Dauster & Partner

(56) Entgegenhaltungen:
- DE-A- 4 328 014
- DE-U- 9 316 877
- DE-U- 9 402 156
- US-A- 4 115 879
- US-A- 5 106 493
- US-A- 5 147 532

## Beschreibung

Die Erfindung betrifft die Verwendung von Grauwasser im Haushalt.

Es ist bekannt, daß für bestimmte Zwecke im Haushalt, beispielsweise die Toilettenspülung, kein Trinkwasser erforderlich ist, sondern daß man hierfür leicht verschmutztes Abwasser aus dem Haushalt verwenden kann, das als Grauwasser bezeichnet wird. Solches Grauwasser stammt beispielsweise aus dem Abfluß von Waschbecken, Badewannen, Duschbecken, Waschmaschinen o. dgl. Gegebenenfalls kann auch Regenwasser verwendet werden. Das Grauwasser wird dann in einem Behälter gesammelt, bis es zur Benutzung aus dem Behälter entnommen wird.

Selbst bei gefiltertem Grauwasser besteht jedoch die Gefahr, daß bei längeren Standzeiten eine Geruchsentwicklung auftritt.

Es ist bereits eine Einrichtung für die Substitution von Trinkwasser bei der Toilettenspülung bekannt (DE-C2-3712421), die zur Vermeidung der Geruchsentwicklung den Behälter über eine Zeitschaltuhr gesteuert mit Hilfe eines Kompressors belüftet. Weiter ist es bereits bekannt (DE-OS 41 34 272), das in einem Tank gesammelte Grauwasser automatisch mit einem Desinfizierungsmittel zu versehen.

Weiterhin bekannt ist ein Verfahren zur Grauwassernutzung und eine Grauwasseranlage (DE-A1-43 28 014), bei der dann, wenn das in den Wasserbehälter fließende Wasser trüb ist, der Behälter wieder entleert wird.

Bei Regenwassernutzungsanlagen ist es weiterhin bekannt, mit Hilfe eines zentralen Steuerund Überwachungsgeräts den Wasserstand zu überprüfen (DE-U1-93 16 877).

Es ist auch schon bekannt (US-A-5 147 532), die Qualität des Wassers durch eine UV-Bestrahlung zu verbessern. Diese Bestrahlung geschieht am Ausgang eines Zwischenspeichers und vor dem Eintritt des bestrahlten Wassers in einem Sammeltank. Die Qualität des Wassers in dem Sammeltank wird nicht mehr überprüft.

Es ist ebenfalls bekannt (US-A-5 106 493), einem Wasserspeichertank Desinfektionsmittel zuzusetzen. Das den Speichertank verlassende Wasser wird dann direkt seiner Bestimmung zugeführt.

Es ist außerdem bekannt (DE-U1-94 02 156), den Füllstand eines Regenwasserbehälters anhand des statischen Wasserdrucks zu messen und bei Unterschreiten einer bestimmten Marke den Behälter mit Trinkwasser aufzufüllen.

Ebenfalls bekannt ist es, das von Hand zu betätigende Ventil am Toilettenbecken so auszugestalten, daß nach Spülung mit Brauchwasser anschließend eine geringe Menge Frischwasser, d. h. Leitungswasser, nachfließt.

Der Erfindung liegt die Aufgabe zugrunde, eine praktikable Möglichkeit zur Nutzung von Grauwasser zu schaffen, die insbesondere mit geringem Aufwand auch bei Stillstandszeiten Geruchsentwicklungen vermeidet und dennoch auch nach längeren Stillstandszeiten immer sofort einsatzbereit ist. Außerdem soll automatisch eine Kontrolle derartiger Zusatzeinrichtungen ermöglicht werden, so daß die Anlage benutzerfreundlich arbeitet.

Zur Lösung dieser Aufgabe schlägt die Erfindung eine Vorrichtung mit den Merkmalen des Anspruchs 1 sowie ein Verfahren mit den Merkmalen des Anspruchs 16 vor. Weiterbildungen der Erfindung sind Gegenstand der jeweiligen Unteransprüche. Der Wortlaut sämtlicher Ansprüche wird durch Bezugnahme zum Inhalt der Beschreibung gemacht.

Zum einen geht die Erfindung bei bevorzugten Ausführungsformen von der Überlegung aus, daß das Grauwasser selbst dann, wenn es gefiltert ist, Verunreinigungen enthält, die nach einer bestimmten Zeit zu faulen beginnen, so daß ein Bakterienwachstum einsetzt. Nach der Erfindung erfolgt zu dem Zeitpunkt, den man als den kritischen ansehen muß, beispielsweise nach zwei Tagen, eine Entleerung des Sammelbehälters von dem Grauwasser. Diese Entleerung allein würde die Geruchsbelästigung schon beseitigen, jedoch würde hier der Nachteil entstehen, daß die Anlage anschließend nicht mehr sofort benutzbar ist, sondern erst wieder Grauwasser eingefüllt werden müßte. Kommt der Benutzer einer solchen Anlage beispielsweise aus dem Urlaub zurück, so müßte er zunächst Grauwasser produzieren, bevor seine Toilettenspülung wieder funktioniert. Daher wird von der Entleerungseinrichtung der Sammelbehälter nach der Entleerung gleich wieder mit Leitungswasser befüllt, damit dieser Zustand nicht eintreten kann.

Der Zeitablauf kann beispielsweise durch eine Zeitschaltuhr festgestellt werden, die nach Ablauf ein Auslaßventil öffnet.

Es sind ebenfalls andere Möglichkeiten zur Messung des Zeitablaufs vorhanden.

In Weiterbildung schlägt die Erfindung vor, daß die Vorrichtung eine Steuereinrichtung mit einem Zeitschaltglied enthält, das die Entleerungseinrichtung auslöst und das bei jeder nicht durch die Entleerungseinrichtung bewirkten Wasserentnahme aus dem Speicher zurückgesetzt wird.

Es kann erfindungsgemäß vorgesehen sein, daß die Entleerungseinrichtung derart ausgebildet ist, daß sie den Wasserspeicher nur zum Teil mit Leitungswasser befüllt. Der Sinn der Verwendung von Grauwasser liegt ja darin, den Verbrauch an Leitungswasser mit Trinkwasserqualität zu verringern. Für den genannten Zweck kann es je nach Größe des Speichers ausreichen, wenn der Speicher mit Leitungswasser für beispielsweise drei oder vier Toilettenspülungen befüllt wird.

Erfindungsgemäß kann vorgesehen sein, daß der Wasserspeicher einen Überlauf mit einem Geruchsverschluß aufweist. Das Grauwasser fällt unregelmäßig an, so daß die Verwendung eines Überlaufs dann erforderlich ist, wenn das Grauwasser grundsätzlich in den Speicherbehälter befördert wird.

In Weiterbildung der Erfindung kann vorgesehen sein, daß die Entleereinrichtung derart ausgebildet ist, daß sie anschließend an die Wiederbefüllung mit Leitungswasser nach kurzer Zeit eine erneute gegebenenfalls nicht vollständige Entleerung durchführt. Während die erste Entleerung nur Grauwasser befördert, kann durch die zweite Entleerung, die jetzt Leitungswasser befördert, ein Geruchsverschluß, der bei der vorhergehenden Entleerung noch mit Grauwasser gefüllt wurde, jetzt auch mit Leitungswasser gefüllt werden. Da der Geruchsverschluß nur geringe Mengen Wasser aufnimmt, kann die zweite Entleerung mit einer geringen Menge Wasser auskommen.

Erfindungsgemäß kann vorgesehen sein, daß die Entleerungseinrichtung eine Pumpe aufweist, wobei es sich hierbei gegebenenfalls um die das Grauwasser zur Toilette befördernde Pumpe handeln kann.

Ebenfalls möglich ist es, daß vom Brauchwasserauslaß aus dem Wasserspeicher eine mit einem Ventil versehene Entleerungsleitung direkt zum Fallrohr führt. Hier kann die Entleerung auch ohne Pumpe durch einfaches Öffnen des Ventils durchgeführt werden.

Insbesondere schlägt die Erfindung jedoch vor, eine Entleerungsieitung so anzuordnen, daß sie zu dem Überlauf des Wasserspeichers führt.

Erfindungsgemäß kann vorgesehen sein, daß die Zuleitung für Grauwasser und/oder Leitungswasser ein Magnetventil aufweist.

Ebenfalls vorgesehen sein kann, daß die Zuleitung für Grauwasser ein Filter aufweist.

In nochmals weiterer Ausgestaltung schlägt die Erfindung vor, daß die Entleerungseinrichtung derart ausgebildet ist, daß sie einen Entleerungsvorgang bzw. Spülvorgang eines nachgeschalteten Spülkastens auslöst. Dies gilt für den Fall, daß die Toilettenspülung einen Spülkasten mit stehendem Wasser aufweist. Da solche Spülkasten eine handbetätigte Entleerungseinrichtung aufweisen, braucht nur eine geringfügige Modifizierung vorgenommen zu werden, da man diese Einrichtung ausnutzen kann. Auch hier kann vorgesehen sein, daß zwei Spülvorgänge hintereinander, gegebenenfalls mit einem gewissen Abstand, durchgeführt werden, um auch den Siphon der Toilette mit Leitungswasser zu füllen.

Die Auslösung des Spülvorgangs des Spülkastens kann beispielsweise dadurch geschehen, daß an dem Betätigungsgriff ein Hubmagnet oder ein kleiner Elektroantrieb vorgesehen ist, der über eine elektrische Leitung oder ferngesteuert von der Entleerungseinrichtung oder deren Steuerung ausgelöst wird. Ebenfalls möglich ist es, einen Hydraulikzylinder für den Spülvorgang zu verwenden, der sein Druckwasser von der Pumpe der Entleerungseinrichtung erhält.

Anstelle einer leitungsgebundenen Fernsteuerung bzw. Auslösung schlägt die Erfindung ebenfalls vor, der Entleerungseinrichtung einen Sender und der Spüleinrichtung des Spülkastens einen Empfänger zuzuordnen, die funktionell miteinander verbunden sind. Beispielsweise könnte ein Ultraschallsignal durch die Wasserleitung selbst abgegeben werden, das den Spülvorgang auslöst. Denkbar ist es ebenfalls, daß bei Überschreiten eines bestimmten Drucks in der zum Spülkasten führenden Leitung der Spülvorgang ausgelöst wird.

Erfindungsgemäß kann vorgesehen sein, daß nach einer Befüllung des Wasserbehälters und gegebenenfalls des Spülkastens mit Leitungswasser sich die gesamte Steuerungsanlage abschaltet. Bei Leitungswasser sind die Entleerungsvorgänge nicht erforderlich.

Falls jedoch zur Befüllung des Wasserbehälters auch Regenwasser verwendet wird, das auch bei längerer Urlaubszeit nachgeliefert wird, könnte eine solche Anlage auch eine Wiederbefüllung mit frischem Regenwasser durchführen und dann die Entleerungs- und Neubefüllungsvorgänge auch regelmäßig wiederholen.

Zum anderen wird es bei weiteren bevorzugten Ausführungsformen der Erfindung möglich, sobald eines der Funktionsteile der Vorrichtung schlechter oder gar nicht mehr funktioniert, eine Warnung abzugeben. Bei einer sich langsam verschlechternden Funktion kann die Schwelle, bei der das Warnsignal abgegeben wird, so eingestellt werden, daß noch eine Wartung, eine Reparatur oder ein Austausch erfolgen kann, bevor die Funktion vollständig ausfällt.

Je nach Schweregrad der Funktionsstörung kann auch vorgesehen sein, daß die Anlage stillgelegt wird. Dies kann bei schwerwiegenden hygienischen Mängeln der Fall sein. Ebenfalls vorgesehen ist die Möglichkeit, daß die betroffene Funktion durch eine andere Funktion ersetzt wird.

Erfindungsgemäß kann vorgesehen sein, daß die Vorrichtung eine Entkeimungsanlage mit Hilfe von UV-Strahlung aufweist. Derartige Entkeimungsanlagen sind einer Desinfektion mit Hinzufügung von chemischen Mitteln vorzuziehen. Erfindungsgemäß kann nun die Steuereinrichtung der Vorrichtung derart ausgebildet sein, daß sie beispielsweise die Funktion der in der Entkeimungsanlage angeordneten UV-Lampe durch Messen ihres Stromverbrauchs überprüft. Ändert sich der Stromverbrauch gegenüber dem Nennwert, so kann dies einen Hinweis für eine schlechte Funktion der UV-Lampe darstellen. Bei einer schlechten Funktion der UV-Lampe besteht daher auch die Gefahr, daß die Entkeimung nicht mehr korrekt arbeitet. Im einfachsten Fall wird ein Warnsignal dann gegeben, wenn der Stromverbrauch plötzlich auf null zurückgeht, was ein Zeichen für den Ausfall der Lampe ist.

Eine weitere von der Erfindung vorgeschlagene Möglichkeit zur Überprüfung des Arbeitens der Entkeimungsanlage besteht darin, an einer definierten Stelle die Trübung des Brauchwassers festzustellen. Dies kann beispielsweise mit Hilfe einer Lichtquelle und einer Fotozelle oder einem anderen fotoempfindlichen Element geschehen. Am sinnvollsten ist es selbstverständlich, als Lichtquelle hier die sowieso schon vorhandene UV-Lampe zu verwenden. Bei der Überprüfung der Trübung des Brauchwassers können nun mehrere Möglichkeiten unterschieden werden. Tritt eine sich langsam steigernde Trübung auf, so kann dies ein Zeichen dafür sein, daß die Strahlungsquelle mit Ablagerungen bedeckt ist, so daß nur ein Teil der Strahlung in das Wasser gelangt. In diesem Fall würde die Steuereinrichtung eine Aufforderung abgeben, die Entkeimungsanlage zu warten bzw. zu säubern.

Tritt eine plötzliche Trübung des Brauchwassers auf, so kann dies ein Zeichen dafür sein, daß das zugeführte Grauwasser mechanisch verunreinigt ist, beispielsweise durch Sand oder Schlamm, der aus dem Regenwasser stammen kann. In diesem Fall stellt die plötzlich auftretende Trübung ein Indiz für ein nicht mehr arbeitendes Filter dar, das solche mechanischen Verunreinigungen eigentlich entfernen soll.

Die Steuerungseinrichtung kann erfindungsgemäß so ausgebildet sein, daß sie je nach Schwere des Störungsfalls eine Warnung abgibt, die den Betreiber der Vorrichtung zur Wartung auffordert, oder daß sie bei einer schwereren Störung die Anlage abschaltet.

Es kann jedoch erfindungsgemäß in Weiterbildung auch vorgesehen sein, daß im Störungsfall der Wasserspeicher entleert und mit Leitungswasser nachgefüllt wird. Dann kann die Anlage wieder ihre normale Funktion aufnehmen, da dann zunächst ja frisches Leitungswasser aus dem Wasserspeicher nachgeliefert wird.

In diesem Fall kann es sinnvoll sein, daß während der Entleerung des Wasserspeichers und seiner anschließenden Nachbefüllung die Vorrichtung zunächst kein Wasser abgibt.

Es kann erfindungsgemäß jedoch auch vorgesehen sein, daß im Störungsfall die Brauchwasserleitung zwischen dem Wassertank und der Entnahmestelle zur Kanalisation entleert und direkt mit Leitungswasser befüllt wird. Dies bedeutet ein schnelleres Reagieren, da das Leitungswasser nicht erst über den Wasserspeicher nachgefüllt werden muß.

In nochmals weiterer Ausgestaltung der Erfindung kann vorgesehen sein, daß im Störungsfall das Leitungswasser unmittelbar an der Entnahmestelle eingespeist wird. Dies bedeutet eine sehr schnelle Reaktion auf den Störungsfall, andererseits aber auch einen erhöhten Mehraufwand an Installation.

Der Wassertank, der ein relativ großes Volumen aufweisen soll, kann je nach den vorhandenen Gegebenheiten aufgestellt werden. Um seine Entleerung in die Kanalisation zu erleichtern, kann er beispielsweise im Keller eines Hauses angeordnet werden. In diesem Fall benötigt die Vorrichtung eine Fördereinrichtung, die das Brauchwasser aus dem Tank zu den Entnahmestellen fördert. Ebenfalls denkbar wäre es natürlich, den Wasserspeicher unter dem Dach anzuordnen, wobei dann die Fördereinrichtung das Grauwasser von den Waschbecken o. dgl. zu dem Tank befördern müßte, von wo aus es dann durch Schwerkraft selbst zu den Entnahmestellen gelangen könnte.

Die Erfindung schlägt nun vor, daß die Fördereinrichtung eine Pumpe und einen Druckkessel als Druckspeicher aufweisen kann und die Steuereinrichtung dann den Druck und/oder das Arbeiten der Pumpe überwacht. Auch hier kann eine Verbesserung der Benutzerfreundlichkeit der Vorrichtung erreicht werden, da das Arbeiten der Pumpe und das Arbeiten des Druckspeichers für die Vorrichtung wichtig sind.

Das korrekte Arbeiten der Fördereinrichtung, sowohl der Pumpe als auch des Druckkessels, sind insbesondere dann von Wichtigkeit, wenn vorhandene Filter regelmäßig rückgespült werden sollen. Reicht die Förderleistung der Pumpe und/oder der Druck im Druckkessel nicht aus, so kann der Fall auftreten, daß die Rückspülfunktion des Filters nicht mehr zu einem korrekten Ergebnis führt.

Üblicherweise arbeitet die Fördereinrichtung derart, daß der Druck im Druckkessel mit Hilfe eines Sensors gemessen wird. Unterschreitet der Druck einen ersten Wert, wird die Pumpe in Gang gesetzt, bis der Druck einen zweiten Wert überschreitet. Dann wird die Pumpe wieder ausgeschaltet.

Es können nun sowohl Probleme bei der Dichtigkeit der das Gaspolster von dem Wasser in den Druckkessel trennenden Membran als auch direkte Probleme bei der Pumpe auftreten. Im einfachsten Fall kann die Steuereinrichtung die Zeit messen, die die Pumpe arbeiten muß, um den zwischen den beiden genannten Werten liegenden Druckunterschied zu überwinden. Ändert sich diese Zeit, so kann dies ein Indiz sowohl für ein Nachlassen der Pumpleistung als auch für eine beginnende Undichtigkeit der Membran sein.

Eine zweite, von der Erfindung vorgeschlagene Möglichkeit zur Überprüfung der Fördereinrichtung besteht darin, daß der Druck im Druckkessel vor und nach dem Ablaufen eines Rückspülvorgangs gemessen wird. Aus den Parametern der Anlage kennt man diesen Wert. Verändert er sich im Laufe der Zeit, wird ein Störsignal ausgelöst.

Ebenfalls messen kann man den Druckanstieg in Abhängigkeit von der Laufdauer der Pumpe.

Es wurde bereits erwähnt, daß eine plötzliche mechanische Verunreinigung des Brauchwassers von einer Trübungsmessung festgestellt werden kann. Die Erfindung schlägt in Weiterbildung nun vor, daß in der Grauwasserleitung, die zu dem Wasserspeicher führt, ein Umschaltventil angeordnet sein kann, dessen zweiter Auslaß direkt über ein Fallrohr zur Kanalisation führt. Dieses Umschaltventil kann beispielsweise direkt an jedem Waschbecken, Badewanne, Waschmaschine o. dgl. angeordnet werden, deren Grauwasser in den Wassertank gelangen soll. Es ist jedoch ebenfall möglich und wird von der Erfindung vorgeschlagen, ein einziges Umschaltventil in der Grauwasserleitung direkt vor dem Grauwassereinlaß in den Wasserspeicher anzuordnen.

Das Umschaltventil kann mit Vorteil fernsteuerbar sein, also zum Beispiel als Magnetventil ausgebildet sein. In diesem Fall läßt es sich sowohl von der Steuereinrichtung als Reaktion auf einen bestimmten Störungsfall oder auch vom Benutzer über eine Taste direkt umschalten. Will z. B. eine Person ein Moorbad in einer Badewanne nehmen, so ist es sinnvoll, wenn er anschließend beim Öffnen des Badewannenauslasses das Ventil betätigt, so daß die mechanischen Teilchen im Wasser gar nicht erst über das Filter zum Wassertank gelangen, sondern gleich in die Kanalisation gelangen. Ein gleicher Fall kann auftreten, wenn ein Waschbeckensiphon mit Reinigungsmitteln gereinigt wird. Auch in diesem Fall kann man das Grauwasser direkt zur Kanalisation ableiten.

Bei Waschmaschinen könnte man eine Einrichtung vorsehen, die beim ersten Spülen das Spülwasser zur Kanalisation leitet und erst beim zweiten Spülen das Wasser in den Wassertank gelangen läßt.

Um auch hier die Benutzung einfacher zu gestalten, schlägt die Erfindung in Weiterbildung vor, daß in der Grauwasserleitung vor dem Umschaltventil eine Meßeinrichtung für die Wasserqualität angeordnet werden kann. In diesem Fall können die erwähnten Fälle auch von der Steuerung automatisch erkannt und die entsprechenden Maßnahmen eingeleitet werden.

Eine Möglichkeit hierfür besteht darin, daß die Meßeinrichtung auf die Trübung des Grauwassers anspricht. Dann könnten die mechanischen Verunreinigungen abgeleitet werden.

Es ist bekannt, daß sich mit Ändern der Wasserqualität auch die Leitfähigkeit des Wassers stark ändert. Daher kann erfindungsgemäß die Meßeinrichtung die Leitfähigkeit des Wassers messen. Auf diese Weise lassen sich auch chemische Zusätze erkennen, die nicht zu einer Trübung führen.

Das Vorhandensein einer automatisch arbeitenden mit der Steuereinrichtung verbundenen Meßeinrichtung ist insbesondere auch dann von Vorteil, wenn auch Regenwasser in den Wassertank geleitet werden soll.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: schematisch eine Anlage zur Wiederverwendung von Grauwasser;
- Fig. 2: vereinfacht eine Entkeimungsanlage mit einer UV-Lampe;
- Fig. 3: schematisch eine modifizierte Anlage zur Wiederverwendung von Grauwasser
- Fig. 4: eine schematische Darstellung einer Anlage zur Bereitstellung von Grauwasser in Form eines Wasserspeichers mit einer pumpengetriebenen Entleerungseinrichtung;
- Fig. 5: schematisch die Versorgung eines Spülkastens mit Grauwasser.

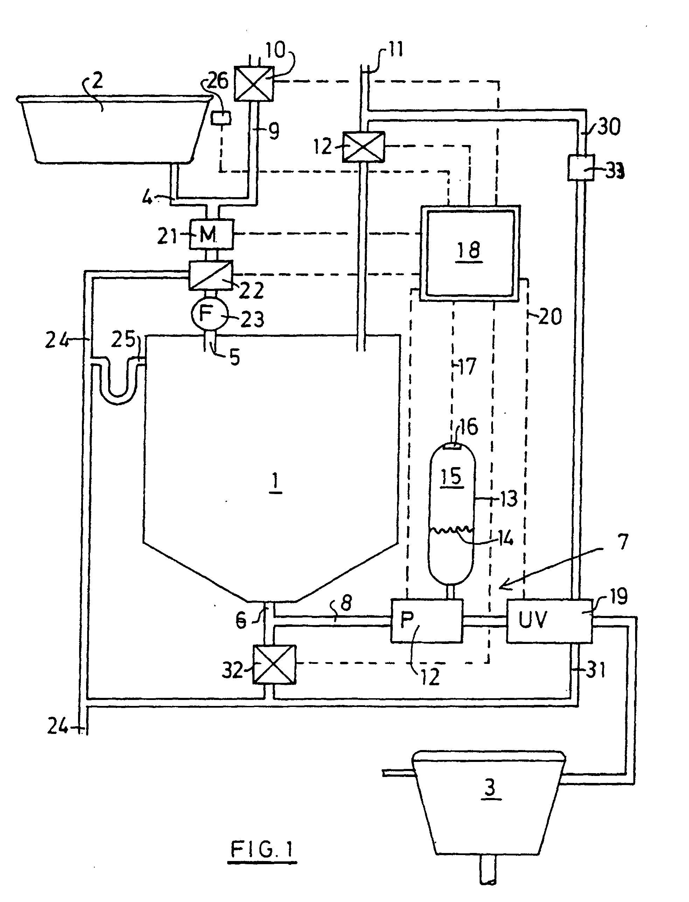

Fig. 1 zeigt in einer vereinfachten schematischen Übersicht eine Brauchwasseranlage, die als zentrales Element einen Wasserspeicher 1 aufweist. Der Wasserspeicher 1 dient zur Aufnahme und zur Speicherung von schon einmal gebrauchtem Wasser, das aus verschiedenen Einrichtungen stammen kann, beispielsweise einer Badewanne 2. Diese Badewanne ist nur als Beispiel angegeben, selbstverständlich können auch Waschbekken, Duschbecken, Geschirrspülmaschinen, Waschmaschinen o. dgl. als Quellen für Grauwasser dienen.

Das Grauwasser, das keine Trinkwasserqualität mehr hat, kann für verschiedene Zwecke immer noch verwendet werden, bei denen keine Trinkwasserqualität benötigt wird. In der Fig. 1 ist als Beispiel ein Spülkasten 3 für eine Toilettenspülung dargestellt.

Von der Badewanne 2 führt eine Grauwasserleitung 4 zu dem Grauwassereinlaß 5 in den Wasserspeicher 1. Aus dem Wasserspeicher 1 führt ein Brauchwasserauslaß 6, an den eine eine Fördereinrichtung 7 aufweisende Brauchwasserleitung 8 angeschlossen ist. Die Brauchwasserleitung 8 führt zu dem erwähnten Spülkasten 3.

Dies ist der Grundaufbau der Anlage.

Für den Fall, daß nicht ausreichend genug Grauwasser zur Verfügung steht, ist an die Grauwasserleitung 4 über eine Abzweigung eine Leitung 9 für Regenwasser angeschlossen, in der ein Magnetventil 10 angeordnet ist. Das Grauwasser kann also durch Regenwasser ergänzt werden.

Zusätzlich kann in den Wassertank über eine Trinkwasserleitung 11 auch das normale aus dem Leitungssystem stammende Wasser mit Trinkwasserqualität eingespeist werden. In der Trinkwasserleitung 11 ist wiederum ein Magnetventil 12 angeordnet.

Um das Brauchwasser zu den Entnahmestellen zu befördern, enthält die Fördereinrichtung eine elektrische Pumpe 12 und einen an diese angeschlossenen Druckspeicher 13. Der Druckspeicher 13 enthält ein durch eine Membran 14 eingeschlossenes Gasvolumen 15. Die Pumpe 12 fördert das Wasser in den Bereich vor der Membran 14 und drückt dadurch das Gasvolumen 15 zusammen. Durch den Druckspeicher wird erreicht, daß die Pumpe nicht ständig zu laufen braucht. In dem Druckspeicher 15 ist ein Drucksensor 16 angeordnet, dessen Werte über eine Steuerleitung 17 einer Steuereinrichtung 18 zur Verfügung gestellt werden.

In der Brauchwasserleitung 8 folgt auf die Pumpe 12 eine Entkeimungsanlage 19, die das Wasser mit Hilfe von UV-Strahlung entkeimt. Auch diese Entkeimungsanlage ist über eine Steuerleitung 20 mit der Steuereinrichtung 18 verbunden. In den Figuren bedeuten die gestrichelten Linien elektrische Leitungen, sowohl Steuerleitungen als auch Stromleitungen.

In die von der Badewanne 2 zum Wassertank 1 führende Grauwasserleitung 4 ist in Strömungsrichtung gesehen zunächst eine Meßeinrichtung 21 eingeschaltet, durch die das Grauwasser hindurchfließt und die bestimmte Eigenschaften des Brauchwassers mißt, beispielsweise die Trübung oder die Leitfähigkeit. Die Ergebnisse stehen der Steuereinrichtung 18 zur Verfügung.

Unmittelbar an die Meßeinrichtung 21 anschließend ist ein Abzweigventil 22 in die Grauwasserleitung 4 eingesetzt, wobei dieses Ventil 22 auch mit einem etwas größeren Abstand angeordnet sein kann. Das Umschaltventil 22 kann über eine Leitung von der Steuereinrichtung 18 ausgelöst werden. Hinter dem Umschaltventil 22 ist dann noch ein Filter 23 angeordnet, das eine Reinigung und Filterung des Grauwassers durchführt.

Das Umschaltventil 22 kann das bei ihm ankommende Grauwasser in eine Abzweigungsleitung 24 umleiten, die direkt zur Kanalisation führt. In diese Abzweigungsleitung mündet auch eine Überlaufleitung 25 des Wasserspeichers 1.

Unmittelbar in der Nähe der Badewanne 2 ist eine von Hand zu betätigende Taste 26 angeordnet, die mit der Steuereinrichtung 18 verbunden ist. Durch Drücken der Taste 26 kann der Benutzer das Umschaltventil 22 umschalten.

Die Steuereinrichtung 18 ist so ausgebildet, daß sie dann, wenn die Meßeinrichtung 21 eine Änderung der Wasserqualität feststellt, ebenfalls das Umschaltventil 22 umschaltet. Auf diese Weise kann sowohl von Hand durch Drücken der Taste 26 als auch in Abhängigkeit von dem Meßergebnis Grauwasser und/oder Regenwasser mit schlechter Wasserqualität direkt zur Kanalisation umgeleitet werden.

Die Entkeimungsanlage 19 weist nun ebenfalls eine Sicherheitseinrichtung zur Überwachung der Qualität des durch die Leitung 8 strömenden Brauchwassers auf.

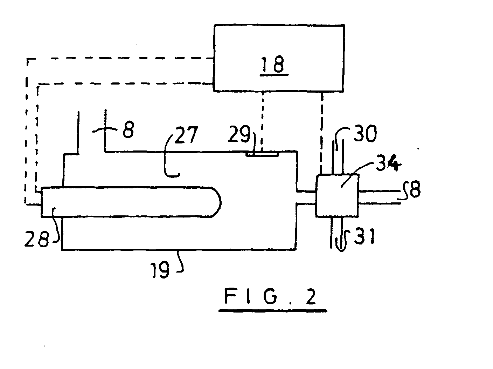

Ein Beispiel einer solchen Sicherheitseinrichtung wird in Fig. 2 beschrieben, auf die jetzt vorübergehend Bezug genommen wird. Die Entkeimungsanlage 19 weist einen Innenraum 27 auf, in den das Brauchwasser aus der Leitung 8 einströmt. Das Brauchwasser verläßt den Innenraum 27 am gegenüberliegenden Ende durch die weiterführende Leitung 8. In den Innenraum 27 der Entkeimungsanlage 19 ragt eine Strahlungsquelle in Form einer UV-Lampe 28, die das an ihr vorbeiströmende Wasser entkeimt. Die UV-Lampe erhält ihre Stromversorgung über Leitungen von der Steuereinrichtung 18.

Im Bereich des rechten von der UV-Lampe 28 abgewandten Endes ist im Innenraum 27 ein fotoempfindliches Element 29 angeordnet, das auf die UV-Strahlung der Lampe 28 anspricht. Das Fotoelement 29 ist über eine Steuerleitung mit der Steuereinrichtung 18 verbunden.

Die Steuereinrichtung überprüft nun ständig sowohl den Stromverbrauch der UV-Lampe 28 als auch das Meßergebnis des fotoempfindlichen Elements 29. Geht der Stromverbrauch der UV-Lampe 28 auf null zurück, so ist die Lampe beschädigt und muß ersetzt werden. In diesem Fall gibt die Steuereinrichtung 18 nicht nur ein Warnsignal aus, sondern legt die Versorgung mit Brauchwasser still, da ohne die Entkeimung Hygieneprobleme im Brauchwasser auftreten können.

Tritt dagegen eine langsame Änderung des von dem fotoempfindlichen Element 29 gelieferten Werts ein, beispielsweise eine Verringerung der Meßspannung, so bedeutet dies, daß entweder die Lampe 28 oder auch der Fotodetektor 29 selbst sich mit Ablagerungen zusetzen oder daß eine Trübung des Wassers aufgetreten ist. Erfolgt das Auftreten dieser Änderung schnell, so spricht dies für eine mechanische Verunreinigung des Wassers, beispielsweise durch Schlamm oder Sand. In diesem Fall ist möglicherweise das Filter 23 gestört. In diesem Störungsfall ist es sinnvoll, die Anlage ebenfalls stillzulegen. Bei einer nur sehr langsam auftretenden Veränderung kann es ausreichen, zunächst nur eine Warnung abzugeben, damit die Anlage gewartet und gereinigt wird.

Wie nochmals Fig. 1 zeigt, ist die Entkeimungsanlage 19 über eine eine Sicherungseinrichtung 33 gegen Rücksaugen aufweisende Abzweigleitung 30 auch mit der Trinkwasser führenden Leitung 11 verbunden. Gleichzeitig hat die Entkeimungsanlage 19 eine weitere Leitung 31, die mit der Abzweigleitung 24 verbunden ist, die zur Kanalisation führt. In die Leitung 31 mündet ebenfalls eine Abzweigung des Brauchwasserauslasses 6, in die ein Magnetventil 32 eingeschaltet ist.

Die Anordnung dieser Leitungen ist in Fig. 2 ebenfalls dargestellt, wo zu sehen ist, daß die Leitungen 30 und 31 an einem Vierwegeventil 34 angeschlossen sind. Im Normalfall strömt das Brauchwasser aus dem Innenraum 27 der Entkeimungsanlage durch das Vierwegventil 34 ungestört hindurch zu der Leitung 8. Bei Betätigung des Vierwegeventils 34 fließt das Wasser dann aus dem Innenraum 27 zur Leitung 31, während die Leitung 8 mit der Leitung 30 verbunden ist, die Leitungswasser führt.

Die Steuereinrichtung 18 ist nun folgendermaßen ausgebildet. Fällt die UV-Lampe vollständig aus, so schaltet die Steuereinrichtung 18 das Vierwegeventil 33 um, so daß an den Spülkasten 3 jetzt Leitungswasser geliefert wird. Gleichzeitig kann sie aus Sicherheitsgründen die Fördereinrichtung 7 stillegen.

Kommt die Steuereinrichtung zu der Ansicht, daß die Störung durch eine Schlechtfunktion des Filters 23 verursacht ist, so kann sie zusätzlich oder anstelle der gerade erwähnten Möglichkeit den Speicher 1 entleeren, indem sie das Magnetventil 32 öffnet, und den Wasserspeicher mit Trinkwasser durch Öffnen des Magnetventils 12 befüllt. Gleichzeitig kann sie eine Rückspülung des Filters 23 über eine nicht dargestellte Rückspüleinrichtung auslösen. Um das weitere Nachfließen von mechanisch verunreinigtem Wasser in den Wasserspeicher 1 zu verhindern, kann sie das Umschaltventil 22 betätigen. Sobald der Wasserspeicher 1 mit Leitungswasser gefüllt ist, kann sie dann das Vierwegeventil zurückschalten.

Während bei der schematisch in Fig. 2 dargestellten Lösung das Vierwegeventil 34 unmittelbar im Anschluß an die Entkeimungsanlage 19 angeordnet ist, ist es selbstverständlich auch möglich, ein solches Umschaltventil 34 unmittelbar neben dem Spülkasten 3 anzuordnen, wobei dann die Trinkwasser führende Leitung 30 auch direkt bis zum Spülkasten 3 geführt werden müßte.

Selbstverständlich kann die Steuereinrichtung Möglichkeiten enthalten, manuell trotz eines Störungsfalls die Vorrichtung in der normalen Weise weiterzubetreiben, zu Testzwecken oder für Notfälle.

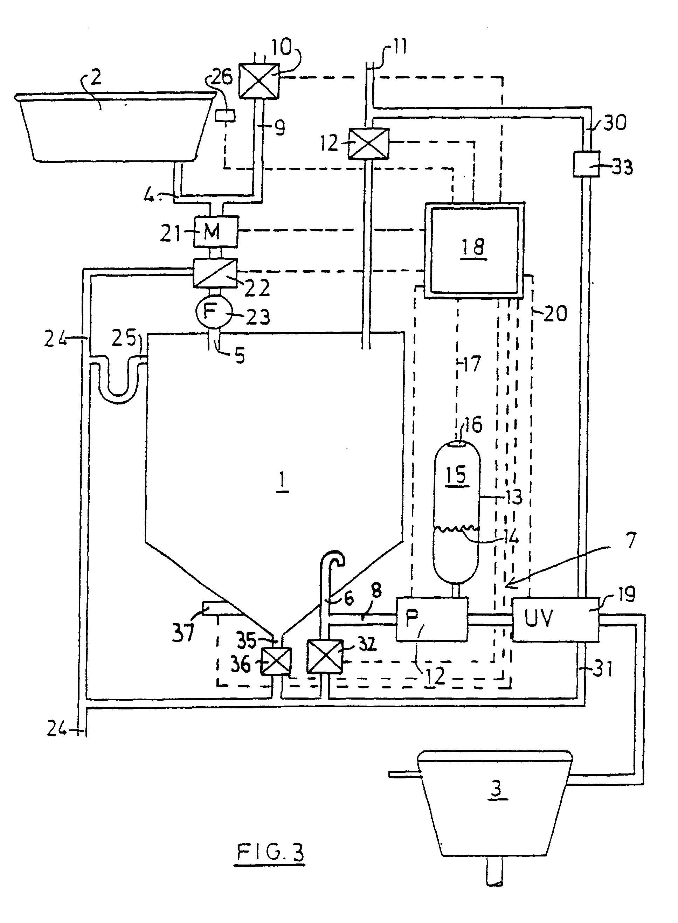

Die in Fig. 3 dargestellte Ausführungsform ist gegenüber derjeningen von Fig. 1 dadurch modifiziert, daß am unteren Ende (Bodenbereich) des Speichers 1 ein Auslaß 35 als Abzug für dort angesammelte Feststoffe, insbesondere Schlamm vorgesehen ist. Da die übrigen Teile der Vorrichtung im wesentlichen denjenigen gemäß Fig. 1 entsprechen, wurden die verwendeten Bezugszeichen weitgehend beibehalten. Der Schlammabzug durch den Auslaß 35 wird durch ein zusätzliches Ventil 36 bewirkt, das wie die übrigen Ventile mit der Steuereinrichtung 18 in Verbindung steht. Weiter kann zusätzlich ein Detektor für die abgesetzten Feststoffe (Schlammdetektor) 37 vorgesehen sein, der, wie in Fig. 3 dargestellt, in einer bestimmten Höhe im Bodenbereich des Speichers 1 angeordnet sein kann. Auch dieser Detektor 37 steht mit der Steuereinrichtung 18 in Verbindung. Dementsprechend kann der Schlammdetektor 37 eine Meldung an die Steuereinrichtung 18 abgeben, wenn der Schlamm innerhalb des Speichers 1 eine bestimmte Höhe oder Dicke erreicht hat. Die Überwachungsschaltung der Steuereinrichtung öffnet dann das Ventil 36 und der abgesetzte Schlamm wird durch den Auslaß 35 abgezogen. Dabei kann vorgesehen sein, daß das Ventil 36 für eine bestimmte Zeit geöffnet bleibt, die üblicherweise ausreicht, den gesamten Schlamm, der sich angesammelt hat, abzuleiten. Es ist auch möglich, das Ventil 36 für eine bestimmte Durchflußmenge zu öffnen oder das Ventil 36 dann zu schließen, wenn der Detektor 37 oder ggf. weitere Detektoren anzeigen, daß kein Schlamm mehr vorhanden ist. Ist überhaupt kein Schlammdetektor 37 vorhanden, kann das Ventil 36 beispielsweise in regelmäßigen Abständen geöffnet werden, um vorhandenen Schlamm abzuziehen.

Auch bei der Ausführungsform gemäß Fig. 3 erfolgt die Ableitung des Brauchwassers über den Auslaß 6, der sich jedoch in Abweichung von Fig. 1 nicht mehr am tiefsten Punkt des Speichers 1 befindet, sondern nach oben in das Innere des Behälters hineingezogen ist. Dadurch wird verhindert, daß Schlamm, der sich am Boden des Speichers 1 abgesetzt hat, durch den Auslaß 6 austreten kann. Zusätzlich kann das ins Innere des Speichers 1 ragende Ende des Brauchwasserauslaßes 6 derart ausgestaltet sein, daß ein unbeabsichtigter Eintritt von Schlamm in den Auslaß verhindert wird, wie dies in Fig. 3 dargestellt ist.

Selbstverständlich kann ein entsprechender Schlammabzug bei sämtlichen Ausführungsformen der in dieser Anmeldung beschriebenen Erfindung vorgesehen sein.

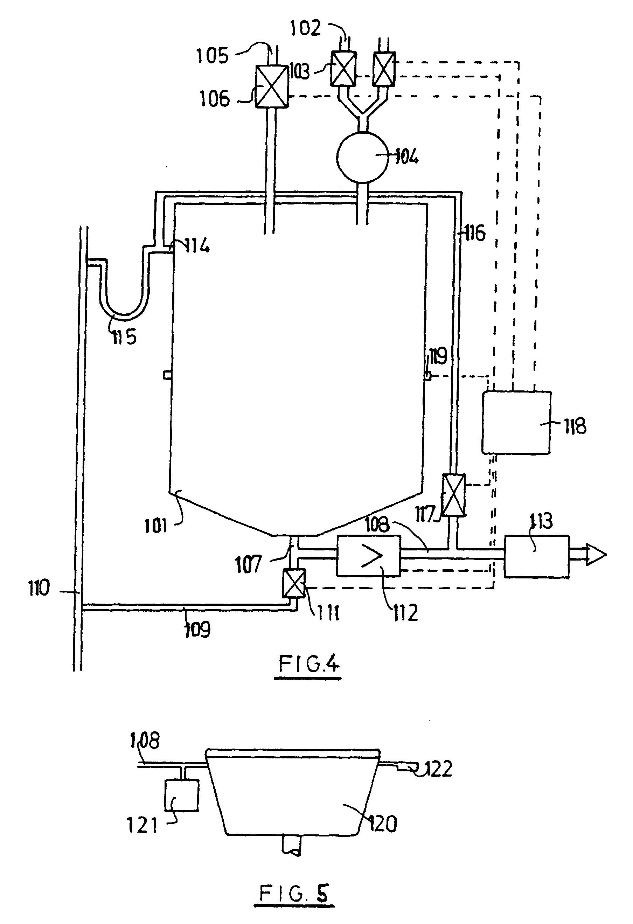

Die in Fig. 4 schematisch dargestellte Anlage zur Bereitstellung von Grauwasser enthält als zentrales Element einen Wasserspeicher 101, der ein je nach Größe der Installation berechnetes Fassungsvermögen hat. In den Wasserspeicher 101 gelangt Grauwasser über eine erste Leitung 102, die, beispielsweise über ein Pumpensystem, mit den Wasserauslässen aus Waschbecken, Badewannen o. dgl. verbunden ist, gegebenenfalls auch mit einer Regenwassersammelanlage. In die Leitung 102 kann ein Magnetventil 103 eingeschaltet sein, das mit Hilfe elektrischen Stroms geöffnet und geschlossen werden kann. Die Leitung 102 für Grauwasser führt dann über ein T-Stück in ein Filter 104.

Der andere Zweig des T-Stücks ist mit einer Leitung für Regenwasser verbunden, wobei auch diese Leitung ein Magnetventil aufweisen kann. Aus dem Filter führt die Leitung dann in das Innere des Wasserspeichers 101, wobei aus Gründen der Geräuschentwicklung die in das Innere führende Leitung auch bis zum Boden durchgeführt werden kann.

In den Wasserspeicher 101 führt eine Leitung 105 für Trinkwasser, also Leitungswasser, in die ebenfalls ein Magnetventil 106 eingeschaltet ist. Auch diese Leitung kann bis in den Bereich des Bodens des Speichers geführt sein. Die Leitung dient dazu, bei Bedarf Leitungswasser einzufüllen.

Aus dem Wasserspeicher 101 führt an dessen tiefster Stelle ein Wasserauslaß 107, der über ein T-Stück einerseits mit einer weiterführenden Leitung 108 und andererseits mit einer Entleerungsleitung 109 verbunden ist. In der Entleerungsleitung 109, die zu einem Fallrohr 110 führt, ist ebenfalls ein Magnetventil 111 eingesetzt. Die Entnahmeleitung 108 führt zu einer elektrisch betriebenen Pumpe 112, von der aus das Wasser über die Entnahmeleitung 108 zu den in Fig. 4 nicht dargestellten Entnahmestellen für das Grauwasser führt. In diese Leitung 108 kann stromab der Pumpe 112 auch eine Einrichtung 113 zur Zugabe von Desinfektionsmitteln o. dgl. oder eine UV-Entkeimungsanlage eingeschaltet sein.

Der Wasserspeicher 101 enthält in seinem oberen Bereich einen Überlauf 114, der über einen sich daran anschließenden einen Geruchsverschluß bildenen Siphon 115 zu dem Fallrohr 110 führt.

Von der Entnahmeleitung 108 für das Grauwasser führt eine zweite Entleerungsleitung 116 zu dem Überlauf 114 vor dessen Siphon 115. Auch in dieser Entleerungsleitung 116 ist ein Magnetventil 117 eingeschaltet.

Die Anlage enthält eine zentrale Steuerung 118, mit der die verschiedenen Magnetventile, die Pumpe 112 und ein Niveaufühler 119 verbunden sind. Der Niveaufühler 119 ist schematisch dargestellt, es kann sich hierbei beispielsweise um einen Schwimmer oder eine andere Einrichtung handeln, die dann anspricht, wenn der Behälter 101 bis zu einer bestimmten Höhe mit Wasser befüllt ist.

Im Normalbetrieb läuft das Grauwasser über die Leitung 102 und das geöffnete Magnetventil 103 und das Filter 104 in den Behälter 101 ein. Das Grauwasser wird je nach Anfall in den Speicher 101 eingefüllt. Wenn die Füllhöhe den Überlauf 114 erreicht, fließt das Grauwasser über den Geruchsverschluß 115 in das Fallrohr 110.

Die Pumpe 112 kann beispielsweise immer dann eingeschaltet werden, wenn in der Entnahmeleitung 108 ein Druckabfall auftritt. Sie fördert das aus dem Wasserspeicher 101 entnommene Grauwasser zu den Verbrauchern, beispielsweise einem in Fig. 5 angedeuteten Spülkasten 120 einer Toilettenspülung.

Bei jeder Wasserabnahme aus der Entnahmeleitung 108 wird in der Steuereinheit 118 ein Zeitschaltglied auf Null zurückgesetzt, das anschließend wieder zu laufen beginnt. Sobald das Zeitschaltglied eine Zeitdauer von beispielsweise zwei Tagen ununterbrochen erreicht hat, löst es einen Entleerungsvorgang für den Wasserspeicher 101 aus. Dieser kann beispielsweise folgendermaßen ablaufen. Zunächst wird bei nicht arbeitender Pumpe 112 das Magnetventil 111 geöffnet, so daß der Inhalt des Wasserspeichers 101 über die Entleerungsleitung 109 in das Fallrohr 110 läuft. Da der Inhalt des Wasserspeichers 101 und die Leitungsquerschnitte der Leitungen bekannt sind, läßt sich die Zeit berechnen, die zum vollständigen Entleeren des Speichers 101 benötigt wird. Daher kann die Öffnung des Magnetventils 111 rein zeitbestimmt erfolgen.

Nach vollständiger Entleerung wird das Magnetventil 111 wieder geschlossen und das Magnetventil 106 für das Leitungswasser geöffnet. Dadurch fließt Leitungswasser, d. h. Trinkwasser, in den Behälter 101 ein. Aufgrund der geometrischen Daten der Leitung 105 und dem Wasserdruck kann auch das Befüllen zeitgesteuert erfolgen. Es wird jedoch bevorzugt, mit Hilfe des Niveaufühlers 119 eine Befüllung bis zu dieser Höhe durchzuführen. Sobald der Speicher 101 bis zu der Linie des Niveaufühlers 119 mit Leitungswasser befüllt ist, wird das Magnetventil 106 geschlossen. Der Wasserspeicher 101 ist jetzt mit einer ausreichenden Menge Trinkwasser befüllt, so daß keine weitere Beeinträchtigung des Wassers durch Geruch oder Bakterien zu besorgen ist.

Die Steuerung kann aber auch aufwendiger gestaltet werden, was im folgenden beschrieben wird.

Nach der bereits beschriebenen Entleerung kann sich nun noch eine zweite verkürzte Entleerung folgendermaßen anschließen.

Das Magnetventil 117 wird von der Steuerung 118 geöffnet und die Pumpe 112 in Gang gesetzt. Sie pumpt nun das im Wasserspeicher 101 stehende Trinkwasser über die Entleerungsleitung 116 zu dem Überlauf 114 und durch den Siphon 115 in das Fallrohr. Damit wird jetzt auch das noch in dem Siphon 115 stehende Grauwasser durch Trinkwasser ersetzt.

Die Anlage kann auch eine dritte Art der Entleerung durchführen. Bei dieser dritten Art der Entleerung erfolgt bereits der erste Entleerungsvorgang nicht über die Leitung 109, sondern in der beschriebenen Weise über die Entleerungsleitung 116. Es wird also zunächst der Inhalt des Wasserspeichers 101 mit Hilfe der Pumpe 112 über die Entleerungsleitung 116 und den Siphon 115 in das Fallrohr 110 entleert. Anschließend gibt die Steuereinheit 118 ein Signal an eine Empfangseinheit 121 am Spülkasten 120, die einen normalen Spülvorgang des Spülkastens 120 auslöst. Zu diesem Zweck kann die Empfangseinheit 121 beispielsweise einen Hubantrieb, einen Elektromotor oder auch einen Hydraulikzylinder auslösen, der den normalen Betätigungsgriff 122 des Spülkastens 120 bewegt.

Als Signal kann beispielsweise ein Ultraschallsignal verwendet werden, das direkt in die Entnahmeleitung 108 eingespeist wird, so daß die Empfängereinheit 121 über die Leitung 108 ausgelöst wird.

Soll der Spülvorgang durch einen Hydraulikzylinder ausgelöst werden, so kann erfindungsgemäß der Hydraulikzylinder mit unter Druck stehender Hydraulikflüssigkeit über eine Hydraulikleitung versorgt werden, die von der Steuereinheit ausgehen kann.

Nach der sich an die erste Entleerung über die Entleerungsleitung 116 anschließenden Wiederbefüllung des Wasserspeichers 101 kann dann bei der zweiten kurzzeitigen Entleerung auch eine zweite Auslösung des Spülkastens 120 erfolgen, so daß auch der Siphon der Toilette mit Leitungswasser gefüllt wird.

Möglich sind auch Kombinationen der verschiedenen Vorgänge. So könnte beispielsweise die erste Entleerung sowohl über die Leitung 109 als auch über die Leitung 116 erfolgen oder zunächst über die Leitung 109 und im letzten Bereich über die Leitung 116.

Wenn, wie bei der dargestellten Ausführungsform beschrieben, die Befüllung des Wasserspeichers 101 nach der automatischen Entleerung nur mit Trinkwasser erfolgt, so kann nach der zweiten Entleerung die Anlage sich ausschalten. Bei vollständiger Befüllung aller Teile der Anlage mit Trinkwasser ist eine Beeinträchtigung durch Geruch o. dgl. nicht mehr zu befürchten.

Erfolgt jedoch eine Befüllung des Wasserspeichers 101 mit Regenwasser, so kann es vorgesehen sein, daß die automatische Entleerung in größeren Abständen wiederholt wird.

## Patentansprüche

1. Vorrichtung zur Wiederverwendung und Bereithaltung von Grauwasser, mit
1.1 einem Wasserspeicher (1),
1.2 einer von dem Auslass mindestens eines Grauwasser abgebenden Geräts (2) zu dem Wasserspeicher (1) führenden Grauwasserleitung (4, 9),
1.3 einem Leitungswasseranschluß (11),
1.4 einem aus dem Wasserspeicher (1) herausführenden Brauchwasserauslass (6),
1.5 einer von dem Brauchwasserauslass (6) zu mindestens einer Brauchwasserentnahmestelle (3) führenden Brauchwasserleitung (8),
1.6 einer Fördereinrichtung (7) zur Förderung des Brauchwassers durch die Brauchwasserleitung (8) zu der Entnahmestelle (3), sowie mit
1.7 einer Steuereinrichtung (18), die
1.7.1 bei schlechter und/oder fehlender Funktion eines der Teile der Vorrichtung eine Warnung abgibt und/oder die Vorrichtung stillegt und/oder die betroffene Funktion umgeht, **dadurch gekennzeichnet, dass**
1.8 die Steuereinrichtung (18) zur Überprüfung der Qualität des den Wasserspeicher (1) verlassenden Brauchwassers ausgebildet ist.

2. Vorrichtung nach Anspruch 1, mit einer UV-Entkeimungsanlage (19) für das Brauchwasser, deren Funktion von der Steuereinrichtung (18) überprüft wird.

3. Vorrichtung nach Anspruch 2, bei der die Steuereinrichtung (18) den Stromverbrauch der Strahlungsquelle (28) der Entkeimungsanlage (19) überprüft.

4. Vorrichtung nach einem der Ansprüche 1 bis 3, bei der die Steuereinrichtung (18) die Trübung des Brauchwassers überprüft.

5. Vorrichtung nach einem der Ansprüche 1 bis 4, bei der im Störungsfall der Wasserspeicher (1) zur Kanalisation entleert und mit Leitungswasser und/oder Regenwasser befüllt wird.

6. Vorrichtung nach einem der Ansprüche 1 bis 5, bei der im Störungsfall die Brauchwasserleitung (8) entleert und mit Leitungswasser und/oder Regenwasser versorgt wird.

7. Vorrichtung nach einem der Ansprüche 1 bis 6, bei der im Störungsfall unmittelbar an der Entnahmestelle (3) Leitungswasser eingespeist wird.

8. Vorrichtung nach einem der Ansprüche 1 bis 7, bei der die Fördereinrichtung eine Pumpe (12) und einen Druckkessel (13) als Speicher aufweist und die Steuereinrichtung (18) den Druck in dem Druckkessel (13) überwacht, insbesondere den Druckverlauf.

9. Vorrichtung nach Anspruch 8, bei der zur Überwachung der Fördereinrichtung (7) der Druckanstieg im Druckkessel (13) in Abhängigkeit von der Laufdauer der Pumpe (12) gemessen wird.

10. Vorrichtung nach einem der Ansprüche 8 oder 9, bei der zur Überwachung der Fördereinrichtung (7) der nach Ablauf eines Rückspülvorgangs herrschende Druck im Druckkessel (13) gemessen wird.

11. Vorrichtung nach einem der Ansprüche 1 bis 10, mit einem Umschaltventil (22) in der Grauwasserleitung, dessen zweiter Auslaß zu der Kanalisation führt.

12. Vorrichtung nach Anspruch 11, bei der ein Umschaltventil (22) an mindestens einem Grauwasser abgebenden Gerät angeordnet ist, vorzugsweise an allen.

13. Vorrichtung nach einem der Ansprüche 11 oder 12, bei der das Umschaltventil (22) in der Grauwasserleitung (4) vor dem Grauwassereinlaß (5) in den Wasserspeicher angeordnet ist.

14. Vorrichtung nach einem der Ansprüche 11 bis 13, mit einer in der Grauwasserleitung (4) vor dem Umschaltventil (22) angeordneten Meßeinrichtung für die Grauwasserqualität, insbesondere für die Trübung und/oder die Leitfähigkeit des Grauwassers.

15. Vorrichtung nach einem der Ansprüche 1 bis 14, mit einem für die Ableitung von Feststoffen, insbesondere Schlamm vorgesehenen Auslaß (35), der vorzugsweise am Bodenbereich des Speichers (1) angeordnet ist und dem ggf. ein mit der Steuereinrichtung (18) in Verbindung stehender Detektor (37) zur Bestimmung der Feststoffmenge zugeordnet ist.

16. Verfahren zur Nutzung von Grauwasser, insbesondere mit Hilfe einer Vorrichtung nach einem der vorhergehenden Ansprüche, bei dem
16.1 das Grauwasser in mindestens einen Wasserspeicher (1; 101) überführt und
16.2 als Brauchwasser bei Bedarf aus einem Speicher (1; 101) entnommen wird, und bei dem
16.3 durch eine Steuereinrichtung (18; 118) der Betriebszustand der verwendeten Vorrichtung überwacht und in Abhängigkeit vom Überwachungsergebnis bestimmte Funktionen der Vorrichtung ausgelöst und/oder durchgeführt werden, **dadurch gekennzeichnet, dass**
16.4 durch die Steuereinrichtung (18, 118) die Qualität des den Wasserspeicher (1, 101) verlassende Brauchwassers überprüft wird.

17. Verfahren nach Anspruch 16, bei dem bei einer Fehlfunktion eines Teils der Vorrichtung eine Warnung erfolgt oder die Abgabe von Grauwasser stillgesetzt wird.

18. Verfahren nach Anspruch 16 oder 17, bei dem bei einer Störung das Brauchwasser durch Leitungswasser und/oder Regenwasser ersetzt wird.

19. Verfahren nach einem der Ansprüche 16 bis 18, bei dem das korrekte Arbeiten einer UV-Entkeimungsanlage (19) durch eine Messung des Stromverbrauchs der UV-Strahlungsquelle und/oder durch eine Messung der Trübung des Brauchwassers stromab der UV-Entkeimungsanlage (19) überprüft wird.

20. Verfahren nach einem der Ansprüche 16 bis 19, bei dem das Brauchwasser von einer einen Druckspeicher (13) aufweisenden Pumpe (12) durch die Brauchwasserleitung (8) gefördert und die Funktion des Druckspeichers (13) und/oder der Pumpe (12) durch Messen des Drucks, insbesondere des Druckverlaufs in Abhängigkeit von dem Arbeiten der Pumpe (12), überprüft wird.

21. Verfahren nach einem der Ansprüche 16 bis 20, bei dem die Wasserqualität des Grauwassers vor Einleiten in den Wassertank (1), insbesondere durch Messung der Trübung des Grauwassers und/oder der Leitfähigkeit des Grauwassers, geprüft und das Grauwasser gegebenenfalls unter Umgehung des Wassertanks (1) in die Kanalisation abgeleitet wird.

## Claims

1. Apparatus for the reuse and making available of grey water, with
1.1 a water storage tank (1),
1.2 a grey water pipe (4, 9) leading from the outlet of at least one grey water-supplying device (2) to the water storage tank (1),
1.3 a mains water connection (11),
1.4 a process water outlet (6) leading from the water storage tank (1),
1.5 a process water pipe (8) leading from the process water outlet (6) to the at least one process water extraction point (3),
1.6 a delivery device (7) for delivering process water through the process water pipe (8) to the extraction point (3), as well as with
1.7 a control device (18), which
1.7.1 with inadequate and/or lack of function of one of the parts of the apparatus emits a warning and/or shuts down the apparatus and/or obviates the affected function, **characterized in that**
1.8 the control device (18) is constructed for monitoring the quality of the process water leaving the water storage tank (1).

2. Apparatus according to claim 1, with a UV sterilizing means (19) for process water, whose function is monitored by the control device (18).

3. Apparatus according to claim 2, wherein the control device (18) monitors the power consumption of the radiation source (28) of the sterilizing means (19).

4. Apparatus according to one of the claims 1 to 3, wherein the control device (18) monitors the process water turbidity.

5. Apparatus according to one of the claims 1 to 4, wherein in the case of a fault the water storage tank (1) is emptied into the drain system and filled with mains water and/or rainwater.

6. Apparatus according to one of the claims 1 to 5, wherein in the case of a fault the process water pipe (8) is emptied and supplied with mains water and/or rainwater.

7. Apparatus according to one of the claims 1 to 6, wherein in the case of a fault mains water is fed in directly at the extraction point (3).

8. Apparatus according to one of the claims 1 to 7, wherein the delivery device has a pump (12) and a pressure vessel (13) as a storage means and the control device (18) monitors the pressure in the pressure vessel (13) and in particular the pressure gradient.

9. Apparatus according to claim 8, wherein for monitoring the delivery device (7) the pressure rise in the pressure vessel (13) is measured as a function of the running time of pump (12).

10. Apparatus according to one of the claims 8 or 9, wherein for monitoring the delivery device (7) the pressure in the pressure vessel (13) prevailing after the end of a back-flushing process is measured.

11. Apparatus according to one of the claims 1 to 10, with a changeover valve (22) in the grey water pipe and whose second outlet leads to the drain system.

12. Apparatus according to claim 11, wherein a changeover valve (22) is provided on at least one and preferably all the grey water-supplying devices.

13. Apparatus according to one of the claims 11 or 12, wherein the changeover valve (22) is located in the grey water pipe (4) upstream of the grey water inlet (5) into the water storage tank.

14. Apparatus according to one of the claims 11 to 13, with a measuring device for the grey water quality, particularly for the grey water turbidity and/or conductivity located in the grey water pipe (4) upstream of the changeover valve (22).

15. Apparatus according to one of the claims 1 to 14, with an outlet (35) for draining off solids, particularly sludge and which is preferably located in the bottom area of the storage tank (1) and with which is optionally associated a detector (37) for determining the solids quantity and connected to the control device (18).

16. Process for using grey water, particularly with the aid of an apparatus according to one of the preceding claims, wherein
16.1 the grey water is transferred into at least one water storage tank (1; 101) and
16.2 when necessary process water is extracted from a tank (1; 101) and wherein
16.3 a control device (18; 118) monitors the operating state of the apparatus used and as a function of the monitoring result triggers and/or performs certain apparatus functions, **characterized in that**
16.4 the control device (18; 118) monitors the quality of the process water leaving the water storage tank (1; 101).

17. Process according to claim 16, wherein in the case of a malfunction of part of the apparatus, a warning is given or grey water delivery is stopped.

18. Process according to claim 16 or 17, wherein in the case of a fault the process water is replaced by mains water and/or rainwater.

19. Process according to one of the claims 16 to 18, wherein the correct operation of a UV sterilizing means (19) is monitored by a measurement of the power consumption of the UV radiation source and/or by a measurement of the turbidity of the process water downstream of the UV sterilizing means (19).

20. Process according to one of the claims 16 to 19, wherein the process water is delivered by a pump (12) having a pressure reservoir (13) through the process water pipe (8) and the function of the pressure reservoir (13) and/or the pump (12) is monitored by measuring the pressure, particularly the pressure gradient as a function of the operation of pump (12).

21. Process according to one of the claims 16 to 20, wherein the grey water quality is checked before its introduction into the water tank (1), particularly by measuring the turbidity and/or conductivity of the grey water and the grey water is drained into the drain system, whilst optionally bypassing the water tank (1).

## Revendications

1. Dispositif pour la réutilisation et la mise à disposition de l'eau usée domestique, comprenant
1.1 un réservoir d'eau (1),
1.2 une conduite d'eau usée domestique (4,9) reliant l'évacuation d'au moins un appareil (2) délivrant l'eau usée domestique à un réservoir d'eau (1),
1.3 un raccord d'eau du robinet (11),
1.4 une évacuation d'eau sanitaire (6) sortant du réservoir d'eau (1),
1.5 une conduite d'eau sanitaire (8) reliant l'évacuation d'eau sanitaire (6) à au moins un point de prélèvement d'eau sanitaire (3),
1.6 un dispositif de transport (7) pour le transport de l'eau sanitaire au point de prélèvement (3) par la conduite d'eau sanitaire (8), ainsi que comprenant
1.7 un dispositif de commande (18) qui,
1.7.1 en cas de disfonctionnement ou de non fonctionnement d'une des parties du dispositif, émet un avertissement et/ou arrête le dispositif et/ou évite la fonction concernée, **caractérisé en ce que**
1.8 le dispositif de commande (18) est réalisé pour le contrôle de la qualité de I l'eau sanitaire quittant le réservoir d'eau (1).

2. Dispositif selon la revendication 1, comprenant une installation de décontamination (19) par UV pour l'eau sanitaire dont la fonction est surveillée par le dispositif de commande (18).

3. Dispositif selon la revendication 2, dans lequel le dispositif de commande (18) surveille la consommation de courant de la source de rayonnement (28) de l'installation de décontamination (19).

4. Dispositif selon l'une des revendications 1 à 3, dans lequel le dispositif de commande (18) surveille la turbidité de l'eau sanitaire.

5. Dispositif selon l'une des revendications 1 à 4, dans lequel en cas de panne, le réservoir d'eau (1) est vidangé dans la canalisation et est rempli d'eau du robinet et/ou d'eau de pluie.

6. Dispositif selon l'une des revendications 1 à 5, dans lequel en cas de panne, la conduite d'eau sanitaire (8) est vidangée et est alimentée en eau du robinet et/ou en eau de pluie.

7. Dispositif selon l'une des revendications 1 à 6, dans lequel en cas de panne, l'eau du robinet est alimentée directement au point de prélèvement (3).

8. Dispositif selon l'une des revendications 1 à 7, dans lequel le dispositif de transport présente une pompe (12) et un réservoir de pression (13) et en ce que le dispositif de commande (18) surveille la pression dans le réservoir de pression (13) en particulier la courbe de pression.

9. Dispositif selon la revendication 8, dans lequel pour la surveillance du dispositif de transport (7), la montée de pression est mesurée dans le réservoir de pression (13) en fonction de la durée de fonctionnement de la pompe (12).

10. Dispositif selon l'une des revendications 8 ou 9, dans lequel pour la surveillance du dispositif de transport (7), la pression régnant après l'opération d'un lavage par inversion de courant est mesurée dans le réservoir de pression (13).

11. Dispositif selon l'une des revendications 1 à 10, comprenant une vanne de commutation (22) dans la conduite d'eau usée domestique dont la seconde évacuation débouche dans la canalisation.

12. Dispositif selon la revendication 11, dans lequel une vanne de commutation (22) est disposée sur au moins un appareil délivrant de l'eau usée domestique, de préférence à tous les appareils.

13. Dispositif selon l'une des revendications 11 ou 12, dans lequel la vanne de commutation (22) dans la conduite d'eau usée domestique (4) est disposée en amont de l'admission d'eau usée domestique (5) dans le réservoir d'eau.

14. Dispositif selon l'une des revendications 11 à 13, comprenant un dispositif de mesure disposé dans la conduite d'eau usée domestique (4) avant la vanne de commutation (22) pour la qualité d'eau usée domestique, en particulier pour la turbidité et/ou la conductibilité de l'eau usée domestique.

15. Dispositif selon l'une des revendications 1 à 14, comprenant une évacuation (35) prévue pour l'élimination de substances solides, en particulier de la boue, évacuation qui est disposée de préférence au fond du réservoir (1) et qui est associée éventuellement à un détecteur (37) relié au dispositif de commande (18) pour déterminer la quantité de corps solides.

16. Procédé pour l'utilisation d'eau usée domestique, en particulier à l'aide d'un dispositif selon l'une des revendications précédentes, dans lequel
16.1 l'eau usée domestique est transvasée dans un moins un réservoir d'eau (1; 101) et
16.2 est prélevée au besoin en tant qu'eau sanitaire d'un réservoir (1; 101) et dans lequel
16.3 l'état de service du dispositif utilisé est contrôlé par un dispositif de commande (18; 118) et en fonction du résultat du contrôle, certaines fonctions du dispositif peuvent être déclenchées et/ou effectuées, **caractérisé en ce que**
16.4 la qualité de l'eau sanitaire quittant le réservoir d'eau (1, 101) est vérifiée par le dispositif de commande (18, 118).

17. Procédé selon la revendication 16, dans lequel en cas de disfonctionnement d'une partie du dispositif, il se produit un avertissement ou la délivrance de l'eau usée domestique est arrêtée.

18. Procédé selon la revendication 16 ou 17, dans lequel en cas de panne, l'eau sanitaire est remplacée par l'eau du robinet et/ou l'eau de pluie.

19. Procédé selon l'une des revendications 16 à 18, dans lequel le travail correct d'une installation de décontamination UV (19) est contrôlé par une mesure de la consommation de courant de la source de rayonnement UV et/ou par une mesure de la turbidité de l'eau sanitaire en aval de l'installation de décontamination UV (19).

20. Procédé selon l'une des revendications 16 à 19, dans lequel l'eau sanitaire est transportée par une pompe (12) présentant un réservoir de pression (13) par la conduite d'eau sanitaire (8) et la fonction du réservoir de pression (13) et/ou de la pompe (12) est vérifiée par la mesure de la pression, en particulier de la courbe de pression selon le fonctionnement de la pompe (12).

21. Procédé selon l'une des revendications 16 à 20, dans lequel la qualité de l'eau de l'eau usée domestique est contrôlée avant l'introduction dans le réservoir d'eau (1), en particulier par mesure de l'eau usée domestique et/ou de la conductibilité de l'eau usée domestique et l'eau usée domestique est dérivée dans la canalisation éventuellement en évitant le réservoir d'eau (1).
